# EUROPEAN PATENT APPLICATION

(11) **EP 4 140 292 A1**
(43) Date of publication of application: **01.03.2023**
(21) Application number: 21306160.9
(22) Date of filing: 27.08.2021
(51) Int. Cl.: A01G 25/16, G05B 19/00

(54) **CONTROLLER AND METHOD FOR SCHEDULING REMOTE OPERATIONS**

(71) Applicant: Demand Side Instruments, 14000 Caen (FR)
(72) Inventor: PHILIPPOT, Maele, Caen (FR); BASTARD COROUGE, Clément, Caen (FR)
(74) Representative: Grünecker Patent- und Rechtsanwälte PartG mbB

(57) **Abstract**

Controller (100), in particular for use in a system (1) for remote-controlled irrigation, comprising a memory (101) configured to store computer-executable instructions, wherein the computer-executable instructions comprise instructions for a scheduled operation of the controller (100), a processor (102) configured to execute the computer-executable instructions, and a transceiver (103) configured to receive a first data structure (200) associated with at least one period in a schedule for the operation of the controller (100), wherein the computer-executable instructions cause the processor (102) to determine the at least one period from the first data structure (200), wherein the at least one period is associated with a starting time and a first time interval, and cause the controller (100) to perform an action for the duration of the at least one period, wherein the first data structure (200) comprises a first group (201) of bits, wherein one bit (201a) of the first group (201) of bits indicates a time unit, and wherein the remaining bits of the first group (201) of bits indicate a conversion factor, a second group (202) of bits, wherein the second group (202) of bits indicates the starting time encoded using the time unit and the conversion factor, and a third group (203) of bits, wherein the third group (203) of bits indicates the first time interval encoded using the time unit and the conversion factor.

## Description

### Field of the invention

The present invention relates to a controller, in particular for use in a system for remote-controlled irrigation, and a method for the scheduled operation of such a controller.

### Background

Controllers that are used, for example, as controllers in remote controlled irrigation typically receive their commands over the air. Since the controllers are spaced far apart from each other in order to cover large areas, the protocols used for communication with these controllers are usually low-power wide-area network (LPWAN) protocols. One example of such a protocol is the LoRaWAN standard.

However, the bandwidth capability of these protocols is fairly low. Further, since the individual controllers are usually battery-powered, the power consumption due to network traffic needs to be kept low. Thus, these controllers typically do not continuously listen for network messages. Rather, they only do so at specific active times, thus receiving commands only during these times. This leads to unavoidable latencies, which can be an issue for applications where precise and predictable timing is required.

One solution to the latency problem is to operate the controllers in a scheduled operation, where the controllers perform certain actions at certain times autonomously. The update of these schedules happens during the above-mentioned active times.

However, usually the payload used to upload or update a schedule contains a large amount of data, which is problematic when using a LPWAN protocol, takes a lot of time to transmit, and also uses a considerable amount of energy.

Thus, the object of the present invention is to provide a controller for use in remote-controlled irrigation which can be operated in a time- and energy-efficient manner.

### Summary of the invention

This object is achieved with a controller according to claim 1. Preferred embodiments are specified in the dependent claims.

The controller comprises a memory configured to store computer-executable instructions, wherein the computer-executable instructions comprise instructions for a scheduled operation of the controller, a processor configured to execute the computer-executable instructions, and a transceiver operatively coupled to the memory and the processor, wherein the transceiver is configured to receive a first data structure associated with at least one period in a schedule for the operation of the controller.

The computer-executable instructions cause the processor to determine the at least one period from the first data structure, wherein the at least one period is associated with a starting time and a first time interval, and cause the controller to perform an action for the duration of the at least one period.

The first data structure comprises a first group of bits, wherein one bit of the first group of bits indicates a time unit, and wherein the remaining bits of the first group of bits indicate a conversion factor, a second group of bits, wherein the second group of bits indicates the first point in time encoded using the time unit and the conversion factor, and a third group of bits, wherein the third group of bits indicates the first time interval encoded using the time unit and the conversion factor.

Here and in the following, the term "schedule" generally indicates an aggregation of one or more periods of activity of the controller, where each period has an associated starting time and duration for an activity. Each period may have an activity associated with it. The schedule may further comprise the days of the week. One or more days of the week may have one or more periods associated with it. In the following, periods, which are associated with a day of the week are referred to as "plan" for that day of the week. A plan may be associated with one or more days of one week. Alternatively or additionally, it may be associated with one or more days of a plurality of weeks, in particular subsequent weeks. The schedule of the controller is the aggregate of the individual periods and/or plans.

Thus, the first data structure has at least two parts: The first part comprises the first group of bits, indicating the time unit and conversion time. The second part comprises at least the second and third groups of bit, and defines a plan or a period. The second part may comprise further groups of bits to define the plan or period in more detail as described below. If multiple plans or periods are to be transmitted with the first data structure, corresponding further second parts can be added to the data structure. However, the first part, i.e., the first group of bits, only needs to be transmitted once, since the time unit and conversion factor are universal for all plans or periods of the first data structure. As an example, a plan may have the following structure "Monday; 10:00, 30 minutes, irrigate; 13:30, 60 minutes, irrigate", which means that the controller would perform the action "irrigate" on the day Monday, at 10:00, for 30 minutes, and at 13:30, for 60 minutes. In other words, this plan for the day Monday comprises two periods. In another example, a plan may have the structure "Tuesday, Friday; 7:00, 20 Minutes irrigate; 12:00, 45 minutes, irrigate; 15:00, 20 minutes, irrigate". In this example, the controller would perform the action "irrigate" on the days Tuesday and Friday, at 7:00, for 20 minutes, at 12:00, for 45 minutes, and at 15:00, for 20 minutes. Thus, this plan is associated with two days and comprises three periods.

The period in the schedule for the operation of the controller is determined by the starting time and the first time interval. In other words, the controller begins to perform the action at the starting time and stops the action when the first time interval has elapsed after the starting time.

Preferably, the time unit may be one minute. The time unit may also be multiples of one minute. Alternatively, the time unit may be one hour or multiples thereof. The conversion factor relates the time unit to a value that is used for encoding the start time of a period and its length. In particular, the start time of the period may be referenced with the starting time of the day, i.e. 00:00. By way of example, the first period in the plan for Monday referred to above, "10:00, 30 Minutes", might be encoded as follows: The starting time 10:00 is encoded by the calculation 00:00 + 20 x 30 minutes, and the length is encoded by the calculation 1 x 30 minutes. In other words, in this example, the time unit is minutes, the conversion factor is 30, the converted starting time is 20, and the converted length is 1.

The transceiver may be configured to use a LPWAN protocol. In particular, the transceiver may be configured to use the LoRaWAN protocol.

By structuring the first data structure such that it includes the time unit, the conversion factor, and the point in time and time interval encoded using the time unit and the conversion factor, the required timings for the scheduled operation of the controller can be transmitted using a small payload. Thus, both bandwidth and energy consumption are kept low.

The first group of bits may consist of eight bits. In particular, one bit of first group of bits may be used to indicate the time unit. In particular, it may indicate whether the time unit is one minute or one hour. It may also be used to indicate other suitable time units, such as multiples of minutes, multiples of hours, seconds, or multiples of seconds. Further, up to seven bits of the first group may be used to represent the value of the conversion factor. In other words, the conversion factor may have a maximum value of 127.

The second group of bits may consist of eleven bits. The third group of bits may consist of eleven bits. By using eleven bits for the second and/or third group of bits, it is possible to resolve the duration of one day with the precision of one minute. In other words, it is possible to specify the starting time and the duration of the period for one day with a precision of one minute. This structure of the second and third group of bits is advantageous if the time unit is one minute.

In an alternative embodiment, the second group of bits and/or the third group of bits may consist of 5 bits. By using five bits for the second and/or third group of bits, it is possible to encode values up to 24. This structure of the second and third group of bits is advantageous if the time unit is one hour.

The first data structure may further comprise a fourth group of bits, wherein the fourth group of bits indicates a type of the action. In particular, the fourth group of bits may consist of two bits.

Using a combination where the second and third groups consist of eleven bits, and the fourth group consists of two bits allows an encoding of one period with 24 bits. Thus, a payload can be kept small while allowing high precision.

In the alternative embodiment, using a combination where the second and third groups consist of five bits, and the fourth group consists of two bits allows an encoding of one period with 12 bits. Thus, the payload can be kept small.

The first data structure may further comprise a fifth group of bits, wherein the fifth group of bits indicates a quantity of periods of the schedule of operation of the controller. In particular, the fifth group of bits may consist of eight bits. The fifth group of bits may be used to indicate the total number of periods that should be executed during one plan.

The first data structure may further comprise a sixth group of bits, wherein the sixth group of bits indicates one or more days of the week. In particular, the sixth group of bits may consist of eight bits. The processor may be configured to cause the controller to perform the action on each of the days indicated by the sixth group of bits.

The first data structure may further comprise a seventh group of bits indicating a second time interval encoded using the time unit and the conversion factor. The seventh group of bits may comprise eleven bits. In particular, the second time interval may indicate a time during which the controller should be inactive. If the data structure additionally comprises the seventh group of bits, it may be used to advantageously schedule a periodic operation of the controller. In particular, the controller may start the operation at the start time indicated by the second group of bits. It may then perform the operation for the duration of the first time interval indicated by the third group of bits, and then stop the operation. After this, the controller may stay inactive during the second time interval indicated by the seventh group of bits. When the second time interval has passed, the controller may resume the operation, again for the duration of the first time interval indicated by the third group of bits. This scheme may be repeated until the number of periods indicated by the fifth group of bits has been reached.

For example, the second group of bits may indicate that the operation should begin at 10:00, the third group of bits may indicate a time interval of 30 minutes, the seventh group of bits may indicate a time interval of three hours, and the fifth group of bits may indicate a number of four periods. In this case, the controller would become active at 10:00 and perform an action for a duration of 30 minutes, after which the controller would become inactive for a duration of three hours. After these three hours have elapsed, the controller would again perform the action for a duration of 30 minutes, and then become inactive for three hours. This would be repeated four times in total.

It is to be noted that the terms "first", "second", "third", etc., are used herein only as labels for the different groups of bits. They do not, however, imply an order of the bit groups in the data structure. Further, they do not imply that all bit groups have to be present in the data structure.

In a particularly advantageous embodiment, the first group of bits consists of eight bits, the second and third group of bits consist of eleven bits each, the fourth group of bits consists of two bits, the fifth group of bits consists of eight bits, and the sixth group of bits consists of eight bits. In this case, sending a schedule for one period on one day of one week would result in a payload of 36 bits, or six bytes. The size of the payload will not change if the action should be performed during the same period on one or more of the days, it will also be six bytes. Adding a further period will only increase the payload by three bytes, since the period only needs to be defined using the starting time, first time interval, and action. Thus, sending a schedule for ten periods for each day of the week will only result in a payload of 33 bytes in total. In a conventional format, such a schedule would require several hundreds of bytes.

The transceiver may further be configured to receive the first data structure on a first port of a network protocol, and to receive the first data structure on a second port of the network protocol which is different from the first port. The processor may be configured to determine whether the first data structure indicates a new schedule or a modification to an existing schedule based on whether the first data structure is received on the first port or on the second port of the network protocol.

This way, it is easy to add new periods to an existing schedule. By using the first data structure, it is not necessary to generate a new format for updates of the schedule. Using the port on which the data is received is an easy way to distinguish between a new schedule, which will be received on the first port and should replace an existing schedule, and an update to an existing schedule, which will be received on the second port and used to modify the existing schedule.

The transceiver may further be configured to receive a second data structure, wherein the second data structure indicates a modification to the schedule.

In particular, the second data structure may comprise a eighth group of bits, wherein the eighth group of bits indicates a shift of the starting time or a change of the duration of the first time interval. If the modification is a shift of the starting time, one bit in the eighth group of bits may indicate a direction of the shift, i.e., whether the starting time should be earlier or later. The remaining bits of the eighth group of bits may indicate an amount of time by which the starting point is to be shifted. If the modification is a change of duration of the first time interval, the seventh group of bits may indicate a coefficient by which the first time interval is to be multiplied.

Further, the second data structure may indicate a temporary modification. In this case, the second data structure may comprise an ninth group of bits, indicating a second time interval during which the temporary modification to schedule is to be applied.

It is to be noted that the second data structure may comprise a further group of bits corresponding to the first group of bits. In other words, the second data structure may comprise a time unit and conversion factor which may be used to encode the various time values indicated in the seventh and eight group of bits. For example, the second time interval or the amount of time by which the starting point is to be shifted may be encoded using the time unit and conversion factor.

This way of modifying the schedule is particularly advantageous if minor modifications to the schedule are required, but the overall structure of the periods should remain the same. For example, this way of modifying the schedule is useful to adapt the schedule to changes in the weather. On rainy days, for example, the irrigation periods could be shortened, or the start of the irrigation could be shifted.

The controller according to the invention may further comprise or be an actuator, and the action may comprise controlling an irrigation controller to irrigate an area of a field and/or controlling the transceiver to listen on one or more ports of a network protocol for reception of the first data structure and/or the second data structure.

The invention further provides a computer-implemented method for controlling scheduled operation of a controller in a system, in particular for remote-controlled irrigation of a field, comprising the steps
- receiving first data structure associated with at least one period in a schedule for the operation of the controller
- determining the at least one period from the first data structure, wherein the at least one period is associated with a starting time and a first time interval, and
- causing the controller to perform an action for the duration of the at least one period.

The first data structure may have one or more of the features of the first data structure defined above. Further, the controller may have one or more of the features defined above.

The time unit may be one minute. Alternatively, it may be one hour. The conversion factor is the same as defined above.

The method may further comprise receiving the first data structure on a first port of a network protocol or receiving the first data structure on a second port of the network protocol which is different from the first port, and determining whether the first data structure indicates a new schedule or a modification to an existing schedule based on whether the first data structure is received on the first port or on the second port of the network protocol.

As indicated above, thus, it is easy to add new periods to an existing schedule. By using the first data structure, it is not necessary to generate a new format for updates of the schedule. Using the port on which the data is received is an easy way to distinguish between a new schedule, which will be received on the first port and should replace an existing schedule, and an update to an existing schedule, which will be received on the second port and used to modify the existing schedule.

The method may further comprise receiving second data structure, wherein the second data structure indicates a modification to the schedule, and modifying the schedule based on the second data structure.

The second data structure may have one or more of the features defined above.

As indicated above, this way of modifying the schedule is particularly advantageous if minor modifications to the schedule are required, but the overall structure of the periods should remain the same. For example, this way of modifying the schedule is useful to adapt the schedule to changes in the weather. On rainy days, for example, the irrigation periods could be shortened, or the start of the irrigation could be shifted.

The invention further provides a system for remote-controlled irrigation of a field, comprising an above-described controller. The controller can have one or more of the above-defined features. The system further comprises an irrigation device,

### Brief description of the drawings

Advantageous embodiments will now be described in combination with the enclosed figures.
- Figure 1: schematically shows a system for remote irrigation;
- Figure 2: schematically shows the structure of a controller for remote irrigation;
- Figures 3a and 3b: schematically show a first data structure;
- Figure 4: schematically shows a first data structure; and
- Figures 5a and 5b: schematically show a second data structure

### Detailed description of the invention

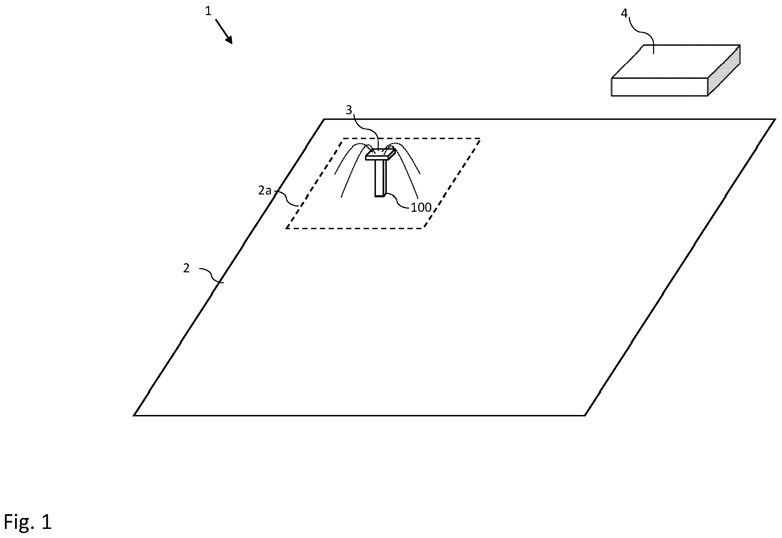

Figure 1 schematically shows a system 1 for remote irrigation of a field 2. The system comprises a controller 100, which in the illustrated embodiment is an actuator controlling an irrigation device 3. The irrigation device 3 may, in particular, be a sprinkler or a plurality of sprinklers, one or more water pumps, or any other device which is suitable for providing water to an area 2a of the field 2. The dotted lines in Figure 1 indicate the distribution of water to the area 2a of the field 2 by the irrigation device 3. The controller 100 communicates via wireless communication with a server or bridge 4 in order to receive scheduling instructions.

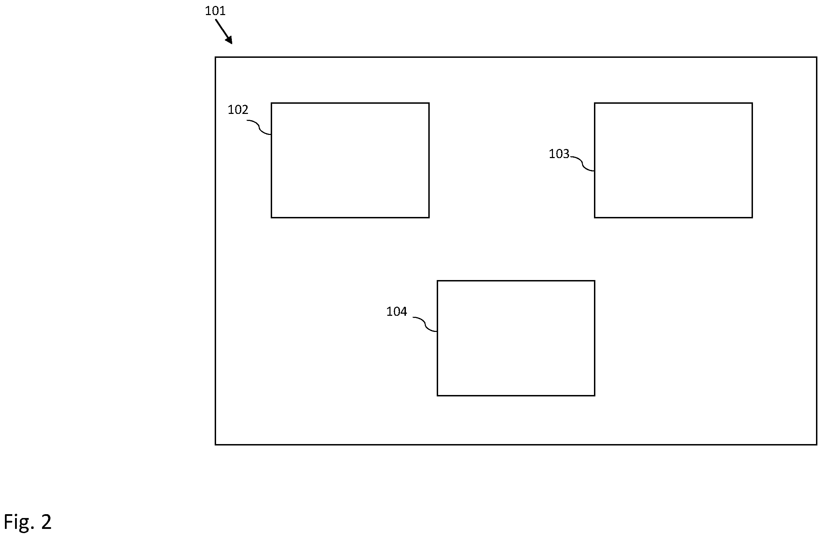

Figure 2 schematically shows the controller 100, which may correspond to the controller 100 shown in Figure 1. It can be seen that the controller 100 comprises a memory 101, a processor 102, and a transceiver 103, which are operably coupled to one another. The transceiver 103 is configured to communicate wirelessly with a server or bridge (not shown). Preferably, the wireless communication uses a LPWAN protocol, in particular the LoRaWAN protocol.

The processor 102 is configured to execute instructions stored in memory 101. The processor 102 is further configured to process data received via the transceiver 103.

In particular, the processor 102 is configured to process the data received from the transceiver 103 in order to generate or update a schedule for operating the controller 100. It is possible that the processor 102 receives the data directly from the transceiver 103. It is also possible that the transceiver 103 stores the received data stored in the memory 101 in a first step, and that the processor 102 retrieves the data from memory 101 in a subsequent step. The processor 102 determines starting times and durations of periods during which the controller 100 should operate. For example, the processor 102 determines a starting time and durations for periods during which a part of a field should be irrigated.

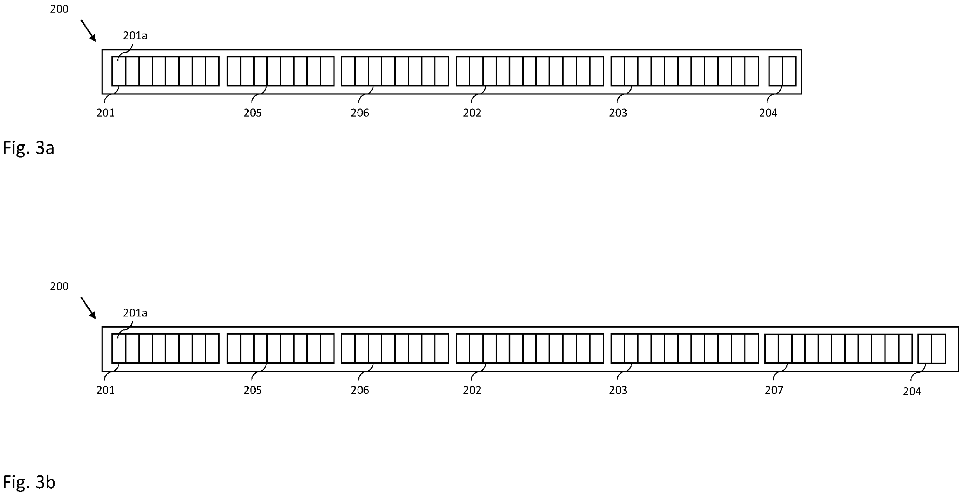

The structure of the data which is processed by the processor 102 will be illustrated with reference to Figures 3 to 5.

Figure 3a schematically shows a first embodiment of a first data structure 200 used for setting or updating a schedule. The first data structure comprises a first group of bits 201, a second group of bits 202, a third group of bits 203, a fourth group of bits 204, a fifth group of bits 205, and a sixth group of bits 206.

The first group of bits 201 comprises a first bit 201a. In the illustrated embodiment, the first group of bits 201 consists of eight bits. The first bit 201a indicates a time unit. Depending on the value of the bit 201a, the time unit is either "hour" or "minute". The remaining bits of the group 201 indicate a conversion factor.

The second group of bits 202 consists of eleven bits and indicates a starting time of a period in a schedule of the controller 100. The third group of bits 203 consists of eleven bits and indicates a time interval corresponding to a duration of the period in the schedule. The fourth group of bits 204 consists of two bits and indicates an action to be performed by the controller during the specified period. For example, the action could be to control the sprinkler 2 illustrated in Figure 1 to irrigate the area 2a of the field 2. In the illustrated embodiment, the groups 202, 203, and 206 define one period of the schedule.

It should be noted that for every period defined in the schedule, corresponding second groups 202, third groups 203, and fourth groups 204 will be included in the data structure 200. In other words, the data structure 200 will include 24 bits for each period of the schedule.

The fifth group 205 consists of eight bits and indicates how many periods should be included in the plan. In the illustrated embodiment, only one period is included in the data structure 200, and, accordingly, the value of the fifth group 205 will be "1".

The sixth group 206 consists of eight bits and indicates one or more days of the week. In particular, seven of the eight bits indicate, by their value, whether the action specified by the fourth group 204 should be performed during the period specified by groups 202 and 203 on a corresponding day of the week. For example, if the bits of the sixth group 206 have the values "01001101", this could mean that the specified action should be performed during the specified period on Monday, Wednesday, Thursday, and Sunday, but not on Tuesday, Friday, and Saturday. In this particular example, the days of the week are indicated in the sixth group 206 in ascending order, starting with the least significant bit indicating "Monday"; the most significant bit is unused. It is understood that the illustrated association of bits to days is merely exemplary.

As is evident from the above, the data structure 200 as illustrated in Figure 3 consists of 36 bits, or six bytes, in total. It should be noted that, as mentioned above, the size of the data structure 200 will increase by 24 bits, or three bytes, by every period that is to be added to the schedule.

However, the groups 201, 205, and 206 are common to all periods in this embodiment. Thus, sending a schedule that comprises four periods for four days of the week will require a data structure 200 that has a size of (8 + 8 + 8 + 4*24) bits, or 15 bytes. Since the size of the data structure 200 is only defined by the number of periods, sending a schedule that comprises four periods for six day of the week will result in a data structure that has the same size, i.e., also 15 bytes.

In operation, the processor 102 extracts the relevant information for the specified periods from data structure 200 by applying the conversion factor and the time unit given by group 201 to the values given by groups 202 and 203.

Figure 3b schematically shows a second embodiment of a first data structure 200, which is used to transmit a periodic schedule to the controller. This embodiment of the first data structure 200 differs from the first embodiment illustrated in Figure 3a in that it additionally comprises a seventh group of bits 207. The seventh group 207 comprises eleven bits, and indicates a time interval during which the controller should be inactive. In operation, the controller begins to perform an action at the time indicated by the second group 202 for the duration indicated by the third group of bits 203, stays inactive for the duration indicated by the seventh group 207, and then performs the action again for the duration indicated by the third group 203.

The embodiment illustrated in Figure 3b may further comprise a group of five bits which are not used (not shown in Figure 3b). This way, the total size of the first data structure 200 will be eight bytes.

The data structures 200 illustrated in Figures 3a and 3b can be interpreted by processor 102 of controller 100 in different ways. In a first mode, the data structure 200 is interpreted as indicating a new schedule. The processor 102 extracts the relevant information for the specified periods and days of the week from the data structure 200 and stores this information in memory 102. In this embodiment, the data structure 200 is received by transceiver 103 via a first port of the LPWAN protocol.

In a second mode, the data structure 200 is interpreted as indicating an update to an existing schedule. The processor 102 extracts the relevant information for the specified periods and days of the week from the data structure 200 and updates the stored schedule accordingly. In this embodiment, the data structure 200 is received by transceiver 103 via a second port of the LPWAN protocol, which is different from the first port of the LPWAN protocol.

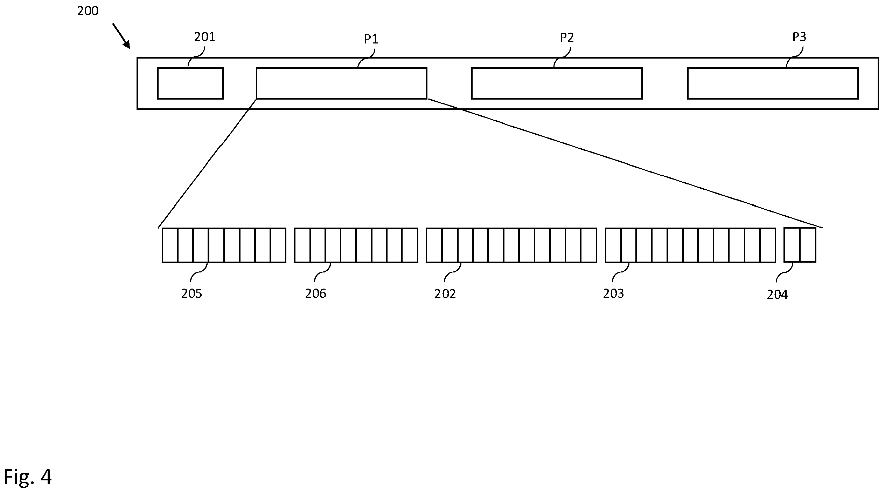

Figure 4 shows a further embodiment of a first data structure 200, which is based on the embodiment shown in Figure 3a. In this embodiment, the first data structure 200 comprises the first group of bits 201, indicating the time unit and conversion factor, and further comprises multiple plans P1, P2, and P3, where each of the plans P1, P2, and P3 comprises groups of bits 202 to 206. It is noted that a corresponding first data structure with multiple plans can be constructed for the embodiment illustrated in Figure 3b. In that case, each plan would further comprise the group 207. Figure 4 illustrates that a schedule consisting of multiple plans can be efficiently transmitted by using only one byte to encode the time unit and conversion factor for all plans.

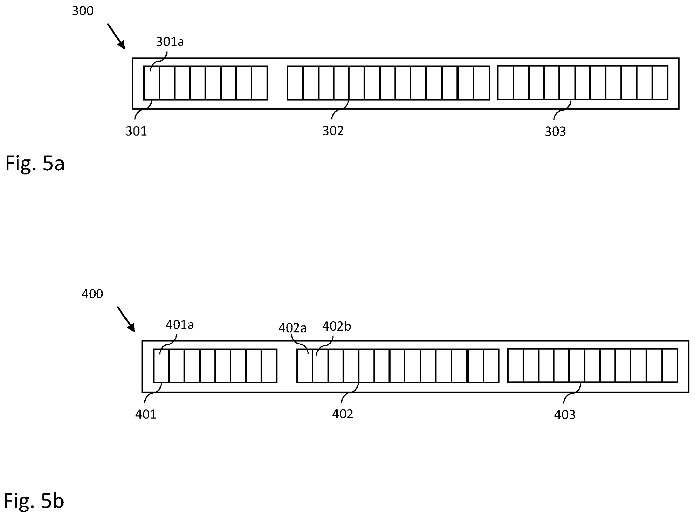

Figure 5a shows a first embodiment of a second data structure 300 used for a temporary modification of a schedule by modified the duration of periods. The second data structure 300 comprises a first group of bits 301, a second group of bits 302, and a third group of bits 303.

The first group of bits 301 consists of eight bits and corresponds to the first group of bits 201 shown in Figure 3. In other words, the group 301 includes one bit 301a indicating a time unit, and seven bits indicating a conversion factor. The second group of bits 302 consists of 13 bits and indicates a coefficient with which a time interval is to be multiplied. The third group of bits 303 consists of eleven bits and indicates a duration for how long the temporary modification should be applied.

Thus, the data structure 300 consists of 24 bits, or three bytes, in total.

In operation, the processor 102 extracts the relevant information for the time interval from data structure 300 by applying the conversion factor and the time unit given by group 301 to the value given by group 303. The processor 102 further applies the coefficient to the periods specified in the currently active schedule. After the time interval specified by group 303 has elapsed, the processor 102 ceases to apply the coefficient to the periods specified in the currently active schedule.

Figure 5b shows a second embodiment of a second data structure 400 used for a temporary modification of a schedule by shifting the starting time of periods. The second data structure 400 comprises a first group of bits 401, a second group of bits 402, and a third group of bits 403.

The first group of bits 401 consists of eight bits and corresponds to the first group of bits 301 shown in Figure 4. In other words, the group 401 includes one bit 401a indicating a time unit, and seven bits indicating a conversion factor. The third group of bits 403 consists of eleven bits and indicates a duration for how long the temporary modification should be applied the third group of bits 403 corresponds to the third group 303 illustrated in Figure 4.

The second group of bits 402 consists of 13 bits, one bit 402a of which is not used. One bit 402b of the remaining twelve bits is used to indicate a direction into which the starting time should be shifted, i.e., to an earlier time or to a later time. The remaining eleven bits indicate an amount of time by which the starting time should be shifted. This amount of time is encoded using the time unit indicated by the bit 401a and the conversion factor indicated by the remaining bits of group 401.

Thus, the data structure 400 consists of 24 bits, or three bytes, in total.

In operation, the processor 102 extracts the relevant information for the time interval and the amount of time from data structure 400 by applying the conversion factor and the time unit given by group 401 to the values given by groups 402 and 403. The processor 102 further shifts the starting times specified in the currently active schedule by the indicated amount in the indicted direction. After the time interval specified by group 403 has elapsed, the processor 102 ceases to apply the shift to the starting times specified in the currently active schedule.

Although the previously discussed embodiments and examples of the present invention have been described separately, it is to be understood that some or all of the above-described features can also be combined in different ways. The above discussed embodiments are particularly not intended as limitations, but serve as examples, illustrating features and advantages of the invention.

## Claims

1. Controller (100), in particular for use in a system (1) for remote-controlled irrigation, comprising:
a memory (101) configured to store computer-executable instructions, wherein the computer-executable instructions comprise instructions for a scheduled operation of the controller (100);
a processor (102) configured to execute the computer-executable instructions; and
a transceiver (103) configured to receive a first data structure (200) associated with at least one period in a schedule for the operation of the controller (100);
wherein the computer-executable instructions cause the processor (102) to
determine the at least one period from the first data structure (200), wherein the at least one period is associated with a starting time and a first time interval, and
cause the controller (100) to perform an action for the duration of the at least one period;
wherein the first data structure (200) comprises
a first group (201) of bits, wherein one bit (201a) of the first group (201) of bits indicates a time unit, and wherein the remaining bits of the first group (201) of bits indicate a conversion factor,
a second group (202) of bits, wherein the second group (202) of bits indicates the starting time encoded using the time unit and the conversion factor, and
a third group (203) of bits, wherein the third group (203) of bits indicates the first time interval encoded using the time unit and the conversion factor.

2. Controller (100) according to claim 1,
wherein the first group (201) of bits consists of eight bits,
and/or
wherein the second group (202) of bits consists of eleven bits or five bits,
and/or
wherein the third group (203) of bits consists of eleven bits or five bits.

3. Controller (100) according to any of the preceding claims,
wherein the first data structure (200) further comprises a fourth group (206) of bits, wherein the fourth group (206) of bits indicates a type of the action, in particular wherein the fourth group of bits consists of two bits,
and/or
wherein the first data structure (200) further comprises a fifth group (205) of bits, wherein the fifth group (205) of bits indicates a quantity of periods in the schedule, in particular wherein the fifth group (205) of bits consists of eight bits,
and/or
wherein the first data structure (200) further comprises a sixth group (206) of bits, wherein the sixth group (206) of bits indicates one or more days of the week, in particular wherein the sixth group (206) of bits consists of eight bits, and
wherein the processor (102) is configured to cause the controller (100) to perform the action on each of the days indicated by the sixth group (206) of bits.

4. Controller (100) according to any of the preceding claims,
wherein the first data structure (200) further comprises a seventh group (207) of bits, wherein the seventh group (206) of bits indicates a second time interval encoded using the time unit and the conversion factor, in particular wherein the seventh group of bits comprises eleven bits.

5. Controller according (100) to any of the preceding claims,
wherein the transceiver (103) is configured to the first data structure (200) on a first port of a network protocol and on a second port of the network protocol which is different from the first port,
wherein the processor (102) is configured to determine whether the first data structure (200) indicates a new schedule or a modification to an existing schedule based on whether the first data structure (200) is received on the first port or on the second port of the network protocol.

6. Controller (100) according to any of the preceding claims,
wherein the transceiver (103) is further configured to receive a second data structure (300, 400), wherein the second data structure (300, 400) indicates a modification of the schedule, and
wherein the processor (102) is configured to update the schedule based on the second data structure (300, 400).

7. Controller (100) according to claim 6,
wherein the second data structure (300, 400) comprises a eighth group (302, 402) of bits, wherein the eighth group (302, 402) of bits indicates a shift of the starting time or a change of the length of the first time interval,
in particular wherein the second data structure (300, 400) indicates a temporary modification and further comprises a ninth group (303, 403) of bits, wherein the ninth group (303, 403) of bits indicates a second time interval during which the temporary modification to the schedule is to be applied.

8. Controller (100) according to any of the preceding claims, wherein the controller (100) is an actuator, and wherein the action comprises at least one of the following:
controlling an irrigation device (3) to irrigate an area (2a) of a field (2); and
controlling the transceiver (103) to listen on one or more ports of a network protocol for reception of the first data structure (200) and/or the second data structure (300, 400) and/or the third data structure.

9. Computer-implemented method for controlling scheduled operation of a controller (100), in particular in a system (1) for remote-controlled irrigation of a field, in particular a controller (100) according to any one of the claims 1 to 8, the method comprising
receiving first data structure (200) associated with at least one period in a schedule for the operation of the controller;
determine the at least one period from the first data structure (200), wherein the at least one period is associated with a starting time and a first time interval,
causing the controller (100) to perform an action for the duration of the at least one period,
wherein the first data structure (200) comprises
a first group (201) of bits, wherein one bit (201a) of the first group (201) of bits indicates a time unit, and wherein the remaining bits of the first group (201) of bits indicate a conversion factor,
a second group (202) of bits, wherein the second group (202) of bits indicates the starting time encoded using the time unit and the conversion factor, and
a third group (203) of bits, wherein the third group (203) of bits indicates the first time interval encoded using the time unit and the conversion factor.

10. Computer-implemented method according to claim 9,
wherein the first group (201) of bits consists of eight bits,
and/or
wherein the second group (202) of bits consists of eleven bits or five bits,
and/or
wherein the third group (203) of bits consists of eleven bits or five bits,
and/or
wherein the first data structure (200) further comprises a fourth group (204) of bits, wherein the fourth group (204) of bits indicates a type of the action, in particular wherein the fourth group of bits consists of two bits,
and/or
wherein the first data structure (200) further comprises a fifth group (205) of bits, wherein the fifth group (205) of bits indicates a quantity of periods in the schedule, in particular wherein the fifth group (205) of bits consists of eight bits,
and/or
wherein the first data structure (200) further comprises a sixth group (206) of bits, wherein the sixth group (206) of bits indicates one or more days of the week, in particular wherein the sixth group (206) of bits consists of eight bits, and
wherein the processor (102) is configured to cause the controller (100) to perform the action on each of the days indicated by the sixth group (206) of bits,
and/or
wherein the first data structure (200) further comprises a seventh group (207) of bits, wherein the seventh group (206) of bits indicates a second time interval encoded using the time unit and the conversion factor, in particular wherein the seventh group of bits comprises eleven bits.

11. Computer-implemented method according to any of the claims 9 or 10, further comprising
receiving the first data structure (200) is received on a first port of a network protocol or on a second port of the network protocol which is different from the first port, and
determining whether the first data structure (200) indicates a new schedule or a modification to an existing schedule based on whether the first data structure (200) is received on the first port or on the second port of the network protocol.

12. Computer-implemented method according to any of the claims 9 to 11, further comprising
receiving a second data structure (300,400), wherein the second data structure (300,400) indicates a modification of the schedule, and
updating the schedule based on the second data structure (300,400).

13. Computer-implemented method according to claim 12, wherein the second data structure (300,400) comprises a eighth group (302,402) of bits, wherein the eighth group (302,402) of bits indicates a shift of the starting time or a change of the length of the first time interval.

14. Computer-implemented method according to claim 13, wherein the second data structure (300,400) indicates a temporary modification and further comprises
a ninth group (303,403) of bits, wherein the ninth group (303,403) of bits indicates a second time interval during which the temporary modification to the schedule is to be applied.

15. System (1) for remote-controlled irrigation of a field (2), comprising
a controller (100) according to any of the preceding claims; and
an irrigation device (3), in particular a sprinkler or a water pump, which is configured to irrigate an area (2a) of the field (2), and configured to be controlled by the controller (100).
